Europäisches Patentamt

European Patent Office

Office européen des brevets

(19)

(11) Publication number : **0 385 760 B1**

# EUROPEAN PATENT SPECIFICATION

(12)

(45) Date of publication of patent specification :
05.01.94 Bulletin 94/01

(51) Int. Cl.⁵ : **B60C 1/00**

(21) Application number : **90302146.7**

(22) Date of filing : **28.02.90**

(54) **Pneumatic tyre.**

(30) Priority : **02.03.89 JP 51764/89**

(43) Date of publication of application :
**05.09.90 Bulletin 90/36**

(45) Publication of the grant of the patent :
**05.01.94 Bulletin 94/01**

(84) Designated Contracting States :
**DE FR GB**

(56) References cited :
**EP-A- 0 127 998**
**GB-A- 2 072 576**
**US-A- 2 698 041**
**US-A- 4 587 302**

(73) Proprietor : **SUMITOMO RUBBER INDUSTRIES LIMITED**
**1-1 Tsutsuicho 1-chome Chuo-ku**
**Kobe-shi Hyogo-ken (JP)**

(72) Inventor : **Taguchi, Takafumi**
**1-1-4-809 Takasucho**
**Nishinomiya-shi, Hyogo-ken (JP)**
Inventor : **Muraoka, Kiyoshige**
**1-6-28 Shioyacho, Tarumi-ku**
**Kobe-shi, Hyogo-ken (JP)**
Inventor : **Uchida, Mamoru**
**2-11-705 Kawasakicho**
**Akashi-shi, Hyogo-ken (JP)**

(74) Representative : **Stewart, Charles Geoffrey**
**SP TYRES UK LIMITED Tyre Technical**
**Division**
**Fort Dunlop, Erdington, Birmingham B24 9QT**
**(GB)**

EP 0 385 760 B1

Jouve, 18, rue Saint-Denis, 75001 PARIS

## Description

The present invention relates to a pneumatic tyre, and more particularly to a heavy duty pneumatic tyre.

Pneumatic tyres are well known having an inner liner located radially inside a carcass of steel cords, used because of their high strength. However, if air and moisture come into contact with steel carcass cords the cords are corroded because of the presence of the air and moisture, and consequently the cords are likely to be broken and the adhesion between the cords and surrounding rubber material of the carcass is apt to be destroyed. Thus, as a main component of the inner liner material, butyl rubber has been employed because of its high impermeability to air and moisture.

For the rubber compositions for the tread, the carcass and suchlike portions, a rubber composition containing natural rubber is preferably employed in order to reduce heat generation in heavy duty use. In connection with this material selection, halogenated butyl rubber is widely used as the inner liner butyl rubber composition because it gives better co-vulcanisation (degree of similarity in respective optimum vulcanising conditions such as temperature and duration time) between the carcass rubber composition containing natural rubber and the inner liner comprising butyl rubber.

However, an inner liner made solely of halogenated butyl rubber is likely to become hard under the influence of oxygen in the air and heat generated in the running tyre, and this in combination with the bending stress in the running tyre frequently results in cracks in the inner liner. Such a crack, if it grows to reach the centre portion of the carcass then allows air and moisture to enter, and therefore, there is a fear of corrosion of the carcass cords, and consequently as previously mentioned, the corrosion gives rise to carcass cord breakage or separation problems due to the adhesion loss between the carcass cords and the surrounding rubber material.

Thus an object of the present invention is to provide a heavy duty pneumatic tyre which is free from crack generation problems due to thermal hardening even if the tyre heats up to a high temperature while it is running, and furthermore, is highly impermeable to air and moisture and consequently capable of preventing carcass cord corrosion from occurring.

According to the present invention there is provided a pneumatic tyre having at least one layer of carcass reinforcement having each edge engaged with a respective bead core with each of the edges turned up outwardly from the inner side around each bead core, and an inner liner made of rubber composition located radially inside the carcass, wherein the rubber component of the inner liner rubber composition consists only of butyl rubber containing halogenated butyl rubber in the range of 60 to 95% by weight.

In the specification hereinafter % means % by weight unless otherwise specified.

The halogen content in one molecule is preferably 5.0% or less, more preferably 3.0% or less, or still more preferably 2.5% or less in order to minimise thermal hardening at high temperature in use of the tyre. Additionally, to provide better co-vulcanisation with the rubber composition in the carcass, the halogen content is preferably 0.5% or more, more preferably 1.0% or higher.

Examples of the aforementioned halogenated butyl rubber are, for instance, chlorinated butyl rubber, brominated butyl rubber and the like. Among these, brominated butyl rubber is particularly suitable because brominated butyl rubber gives better co-vulcanisation with the rubber composition in the carcass.

The halogenated butyl rubber can be obtained by halogenation of ordinary butyl rubber usually used for an automobile tyre (hereinafter referred to as "regular butyl rubber"). The regular butyl rubber is isobutylene-isoprene copolymer normally having an isoprene content, i.e. a degree of unsaturation of the copolymer, in the range of 0.6 to 4.2 mole %.

Non-halogenated butyl rubber used together with the halogenated butyl rubber can be the aforementioned regular butyl rubber.

The inner liner rubber composition in accordance with the present invention may be prepared so that the rubber component thereof contains 60 to 95%, preferably 70 to 90%, of halogenated butyl rubber and 5 to 40%, preferably 10 to 30%, of the regular butyl rubber.

An inner liner rubber composition with an halogenated butyl rubber content in the rubber component of less than 60% exhibits insufficient characteristics with respect to co-vulcanisation with the carcass rubber composition which results in a danger of separation problems of the inner liner from the carcass. On the contrary, an inner liner rubber composition with an halogenated butyl rubber content in the rubber component of more than 95% has a tendency to allow the outbreak of the crack problem.

The inner liner rubber composition can be obtained through a process wherein a rubber component consisting essentially of specified respective amounts of the halogenated butyl rubber and the regular butyl rubber is subjected to heating and mixing so as to become the particular rubber composition and the composition is shaped into the desired form. The rubber composition may include other ingredients which are normally included in a conventional rubber composition. Examples of the aforementioned other ingredients are: an ingredient for improving reinforcement of the rubber, e.g. carbon black; an ingredient serving as vulcanising agent and to provide improved workability, e.g. process oil; an ingredient acting on butyl rubber as vulcanisation-retarder and preventing scorching, e.g. magnesium oxide, mercaptobenzothiazyl disulfide (hereinafter referred to as MBTS); a vulcanisation accelerator, e.g. zinc flower; a vulcanising agent, e.g. sulfur; and the like.

An embodiment will now be described by way of example only, in conjunction with the attached diagrammatic drawing in which:-

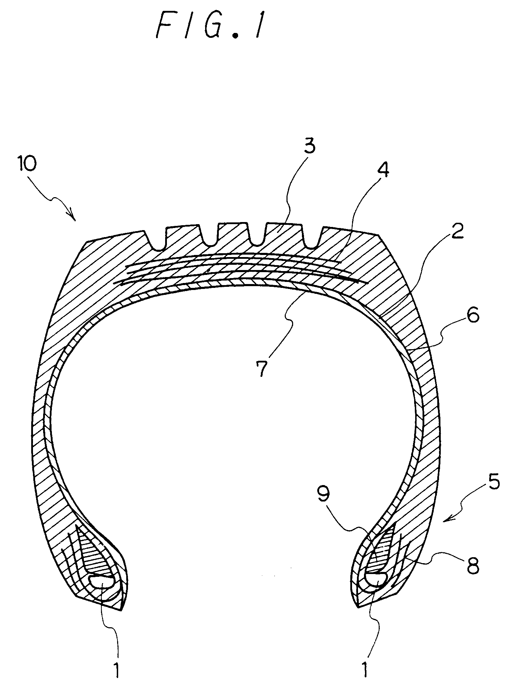

Figure 1 is a cross-sectional view of a pneumatic tyre of the present invention.

Figure 1 is a pneumatic tyre 10 of 11R 24.5 size having a tread portion 3, sidewall portions 6 extending from both edges of the tread portion 3 towards respective sides of the tyre, and bead portions 5 located respectively at radially inner edges of both sidewall portions 6. Both edges of a carcass 2 are turned up outwardly from the axially inner sides respectively around a pair of bead cores 1 respectively on the right-hand side and on the left-hand side so as to be engaged with the bead cores 1 in the bead portions 5. The carcass 2 comprises one layer of parallel steel cords each laid at an angle of about 90° relative to the peripheral (hoop) direction. The carcass may comprise two or more layers as occasion demands.

In addition, a bead reinforcing layer 8 is provided axially outside the carcass cord turn-up portion, and a bead apex 9 is located radially outside and adjacent to the bead core 1.

Further, a belt layer 4 comprising steel cords is located radially inside the tread 3 and radially outside the carcass 2. The belt layer 4 comprises a plurality of cord layers with cord directions intersecting at a relatively small angle.

The pneumatic tyre 10 has an inner liner 7 radially inside and adjacent to the carcass 2, and as mentioned previously, the inner liner 7 is made of a rubber composition containing 60-95% halogenated butyl rubber and 5 to 40% regular butyl rubber and other ingredients added as occasion demands.

Hereinafter, the pneumatic tyre of the present invention is further explained based on several embodiments, although the present invention is not limited to these embodiments.

Detail embodiments 1 to 5 and comparative examples 1 to 2 were mixed formulated according to Table 1. In Table 1 the materials were halogenated butyl rubber (Bromobutyl 2255 (halogen content: 2%) available from Exxon Chemical Japan Limited, trade name); non-halogenated butyl rubber (Butyl 265, available from Exxon Chemical Japan Ltd, trade name); carbon black (Niteron 55S, available from Shin-Nittetsu Kagaku Kabushiki Kaisha, trade name); process oil, stearic acid, magnesium oxide and MBTS. These were all mixed and kneaded. Then, after zinc flower and sulfur were added, the mixture was further mixed and kneaded, and subsequently test pieces (55mm long, 55mm wide, 4mm thick) were prepared.

For the purpose of property measurement of the test pieces, (a) scorching time $T_{L+2}$, (b) 90% vulcanising time and (c) maximum torque were measured by a rheometer test, and further post-vulcanisation properties (hardness and De Mattia Cut Growth) and adhesive property with the carcass were also investigated. These measurements were conducted in the following manner. The measurement results are also shown in Table 1.

Values of scorching time $T_{L+2}$, 90% vulcanising time and maximum torque in rheometer test were measured at measurement temperature of 150° with a rheometer R-100 (available from Monsanto Japan Ltd, trade name) being used.

De Mattia Cut Growth as one of the post-vulcanisation properties was measured in a manner wherein a 2mm wide crack at a surface strain of 60% was prepared on a test piece and the test piece was subjected to bending on a De Mattia fatigue test apparatus, so that the number of times of bending required for the crack width to grow by 1mm was investigated both in the normal (new) condition and in the aged condition in which the test piece had been previously aged by through heating from 150 hours at a temperature of 110°C.

The adhesive property to the carcass was tested by adhering steel cords to a test piece and the test piece with the rubber composition was subject to pressure and vulcanising for 6 minutes at a pressure of 30 kg/cm$^2$ and a temperature of 150°C. Then the adhesive property was determined based on the procedure of JIS (Japanese Industrial Standard) K 6301.

The results shown in Table 1 demonstrate that the test piece of Comparative Example 1, having higher regular butyl rubber content in butyl rubber than the test pieces prepared in accordance with the present invention, gave a far lower adhesive property to the carcass than the test pieces of Examples 1 to 5 although Comparative Example 1 exhibits only a small change due to ageing, and that on the other hand the test piece of Comparative Example 2 containing no regular butyl rubber in butyl rubber exhibits a sharp change due to ageing, although Comparative Example 2 gives enough adhesive property with the carcass.

A pneumatic tyre according to Example 6 of Table 3 of 11R 24.5 size having the construction shown in Figure 1 was made in which the same rubber composition of Example 3 was applied to the inner liner.

Another pneumatic tyre, Comparative Example 3 of the same size and the same construction as Example 6 was made with the liner rubber composition of Comparative Example 2.

These tyres were subjected to a running test for 600 hours at an internal pressure of 8.0 kg/cm$^2$, a load

of 6200 kg and a speed of 20 km/hour, so that the change in the inner liner hardness between before and after runner could be determined. The results are shown in Table 2.

In addition, a crack having a depth of 1mm and a length of 1mm was prepared in the buttress portion of each tyre prior to running, so that the growth of each crack in mm could be measured after the aforementioned running of the tyre under the described conditions. The results are shown in the second page of Table 1 .

The results shown in Table 2 demonstrate that even if the tyre of Example 6 has a crack made on its buttress portion the crack does not grow, and therefore that the tyre of Example 6 is suitable for practical use.

Thus, the pneumatic tyre of the present invention is free from crack generation problems due to thermal hardening even if the tyre heats up to a high temperature while it is running, and furthermore, the pneumatic tyre of the present invention is highly impermeable to air and moisture and consequently prevents carcass cord corrosion problems from occurring. Therefore the pneumatic tyre of the present invention can be suitably used as a tyre for, for example, heavy cargo trucks.

Table 1

| Test Piece No. | butyl rubber | | carbon black | process oil | stearic acid | magnesium oxide | MBTS | zinc flower | sulfur |
|---|---|---|---|---|---|---|---|---|---|
| | halogenated butyl rubber | regular butyl rubber | | | | | | | |
| Ex. 1 | 65 | 35 | 60 | 10 | 2 | 0.5 | 1.5 | 3 | 0.5 |
| Ex. 2 | 70 | 30 | 60 | 10 | 2 | 0.5 | 1.5 | 3 | 0.5 |
| Ex. 3 | 80 | 20 | 60 | 10 | 2 | 0.5 | 1.5 | 3 | 0.5 |
| Ex. 4 | 90 | 10 | 60 | 10 | 2 | 0.5 | 1.5 | 3 | 0.5 |
| Ex. 5 | 95 | 5 | 60 | 10 | 2 | 0.5 | 1.5 | 3 | 0.5 |
| Com. Ex. 1 | 55 | 45 | 60 | 10 | 2 | 0.5 | 1.5 | 3 | 0.5 |
| Com. Ex. 2 | 100 | 0 | 60 | 10 | 2 | 0.5 | 1.5 | 3 | 0.5 |

Components (parts by weight)

EP 0 385 760 B1

Table 1
(Page 2)

-continued-

Measured Properties of Test Pieces

| Test piece No. | rheometer test | | | | after-vulcanizing-properties | | | | | | | adhesive property with carcass (kgf/cm) |
|---|---|---|---|---|---|---|---|---|---|---|---|---|
| | scorching time (minutes) | 90 % vul-canizing time (minutes) | maximum torque (Nm) | (pounds-inches) | Hardness (JIS A) | | | | Dematcher. Cut Growth (number of times) | | | |
| | | | | | new | aged (50 hours) | aged (100 hours) | aged (150 hours) | new | aged | | |
| Ex. 1 | 7.5 | 126.0 | 2.75 | (24.4) | 50 | 51 | 51 | 52 | $40 \times 10^6$ | $14 \times 10^6$ | | 6.5 |
| Ex. 2 | 6.5 | 120.5 | 2.84 | (25.2) | 51 | 52 | 54 | 55 | $40 \times 10^6$ or more | $11 \times 10^6$ | | 7.5 |
| Ex. 3 | 5.1 | 110.3 | 2.99 | (26.5) | 53 | 55 | 56 | 58 | $40 \times 10^6$ or more | $7 \times 10^6$ | | 8.0 |
| Ex. 4 | 4.6 | 100.1 | 3.19 | (28.3) | 56 | 58 | 60 | 62 | $23 \times 10^6$ | $2.3 \times 10^6$ | | 8.0 |
| Ex. 5 | 4.3 | 91.7 | 3.30 | (29.2) | 57 | 59 | 62 | 64 | $15 \times 10^6$ | $1.4 \times 10^6$ | | 8.0 |
| Com. Ex. 1 | 9.0 | 138.5 | 2.64 | (23.4) | 48 | 48 | 49 | 49 | $40 \times 10^6$ | $16 \times 10^6$ | | 5.0 |
| Com. Ex. 2 | 4.0 | 86.5 | 3.40 | (30.1) | 58 | 61 | 63 | 66 | $5 \times 10^6$ | $0.2 \times 10^6$ | | 8.0 |

EP 0 385 760 B1

Table 2

| Ex. No. | Inner Liner Material | Inner Liner Hardness (JIS A) | | Crack Growth (mm) |
|---------|---------------------|-------------------------------|---------------|-------------------|
| | | before running | after running | |
| Ex. 6 | same as Ex. 3 | 53 | 56 | 0 |
| Com. Ex. 3 | same as Co. Ex. 2 | 58 | 67 | 1.5 |

EP 0 385 760 B1

EP 0 385 760 B1

## Claims

1. A pneumatic tyre having at least one layer of carcass reinforcement (6) having each edge engaged with a respective bead core (1) with each of said edges turned up outwardly from the inner side around each bead core (1) and an inner liner (7) made of rubber composition located radially inside said carcass (6), characterised in that the rubber component of the inner liner rubber composition consists only of butyl rubber containing halogenated butyl rubber in the range of 60 to 95% by weight.

2. The pneumatic tyre of claim 1 characterised in that said butyl rubber contains halogenated butyl rubber in the range of 70 to 90% by weight.

3. The pneumatic tyre of claim 1 or 2 characterised in that the halogenated butyl rubber is brominated butyl rubber.

4. The pneumatic tyre of claim 1, 2 or 3 characterised in that the halogen content of said halogenated butyl rubber is in the range of 0.5 to 5.0% by weight.


## Patentansprüche

1. Ein Luftreifen mit wenigstens einer Karkassenverstärkungslage (6), bei welcher jede Kante mit einem jeweiligen Wulstkern (1) in Eingriff steht und jede der Kanten von der Innenseite nach außen um jeden Wulstkern (1) herum geschlagen ist, und einer aus einer Gummizusammensetzung hergestellten Innenlage (7), welche sich radial innerhalb der Karkasse (6) befindet,
dadurch **gekennzeichnet**, daß
die Gummikomponente der Innenlagen-Gummizusammensetzung lediglich aus Butylkautschuk besteht, welcher halogenierten Butylkautschuk im Bereich von 60 bis 95 Gewichtsprozent enthält.

2. Der Luftreifen des Anspruchs 1,
dadurch **gekennzeichnet**, daß
der Butylkautschuk halogenierten Butylkautschuk im Bereich von 70 bis 90 Gewichtsprozent enthält.

3. Der Luftreifen des Anspruchs 1 oder 2,
dadurch **gekennzeichnet**, daß
der halogenierte Butylkautschuk bromierter Butylkautschuk ist.

4. Der Luftreifen des Anspruchs 1, 2 oder 3,
dadurch **gekennzeichnet**, daß
der Halogengehalt des halogenierten Butylkautschuks im Bereich von 0,5 bis 5,0 Gewichtsprozent liegt.


## Revendications

1. Pneumatique ayant au moins une couche d'armature de carcasse (6) dont chaque bord est au contact d'une tringle respective (1), chacun des bords étant replié vers l'extérieur depuis le côté interne autour d'une tringle (1), et une gomme intérieure (7) formée d'une composition de caoutchouc et placée radialement à l'intérieur de la carcasse (6), caractérisé en ce que l'ingrédient de caoutchouc de la composition de caoutchouc de gomme intérieure est formé uniquement de caoutchouc butyle contenant du caoutchouc butyle halogéné en quantité comprise entre 60 et 95 % en poids.

2. Pneumatique selon la revendication 1, caractérisé en ce que le caoutchouc butyle contient du caoutchouc butyle halogéné en quantité comprise entre 70 et 90 % en poids.

3. Pneumatique selon la revendication 1 ou 2, caractérisé en ce que le caoutchouc butyle halogéné est du caoutchouc butyle bromé.

4. Pneumatique selon la revendication 1, 2 ou 3, caractérisé en ce que la teneur en halogène du caoutchouc butyle halogéné est comprise entre 0,5 et 5,0 % en poids.

EP 0 385 760 B1

FIG. 1